# EUROPÄISCHE PATENTANMELDUNG

(11) **EP 4 119 520 A1**
(43) Veröffentlichungstag der Anmeldung: **18.01.2023**
(21) Anmeldenummer: 22183744.6
(22) Anmeldetag: 08.07.2022
(51) Int. Cl.: C04B 28/02, C04B 28/04, C04B 28/06, C04B 28/08, C04B 111/27, C04B 111/60, C04B 111/20

(54) **KIMMSCHICHTMÖRTEL MIT ABDICHTFUNKTION**

(30) Priorität: 09.07.2021 DE 102021117771
(71) Anmelder: Fels-Werke GmbH, 38640 Goslar (DE)
(72) Erfinder: Freund, Joachim, Plockhorst (DE); Dr. Boenkendorf, Ulf, Holle (DE); Rudolph, Martina, Niemegk (DE); Heße, Markus, Leverkusen (DE); Schinkel, Torsten, Hannover (DE)
(74) Vertreter: Maikowski & Ninnemann Patentanwälte Partnerschaft mbB

(57) **Zusammenfassung**

Die Erfindung betrifft einen Kimmschichtmörtel mit Abdichtfunktion, enthaltend
• 20-70 Gew.% mindestens eines mineralischen Zuschlagstoffs,
• 15-50 Gew.% mindestens eines Bindemittels,
• optional sulfatwiderstandsfähige Bindemittel, Füller- und Zuschlagstoffe zur Verbesserung des Sulfatwiderstands des Mörtels,
• mindestens ein Mittel zur Abdichtung, und
• mindestens ein weiteres Additiv
dadurch gekennzeichnet, dass der mindestens eine mineralische Zuschlagstoff ausgewählt ist aus einer Gesteinskörnung gemäß DIN EN 13139, vorzugsweise Kalksteinbrechsand und/oder Dolomitsteinbrechsand und/oder Quarzsand oder Kombinationen davon, wobei die Gesteinskörnung eine Sieblinie von ± 5 % der Fuller-Parabel aufweist.

Die Erfindung betrifft weiterhin die Verwendung des erfindungsgemäßen Kimmschichtmörtels im Mauerwerksbau und ein Verfahren zur Herstellung einer Kimmschicht.

## Beschreibung

### Gebiet der Erfindung

Die Erfindung betrifft einen Kimmschichtmörtel mit Abdichtfunktion im Mauerwerksbau, enthaltend
- 20-70 Gew.% mindestens eines mineralischen Zuschlagstoffs,
- 15-50 Gew.% mindestens eines Bindemittels,
- optional sulfatwiderstandsfähige Bindemittel, Füller- und Zuschlagstoffe zur Verbesserung des Sulfatwiderstands des Mörtels,
- mindestens ein Mittel zur Abdichtung, und
- mindestens ein weiteres Additiv;
dadurch gekennzeichnet, dass der mindestens eine mineralische Zuschlagstoff ausgewählt ist aus einer Gesteinskörnung gemäß DIN EN 13139, vorzugsweise Kalksteinbrechsand und/oder Dolomitsteinbrechsand und/oder Quarzsand oder Kombinationen davon, wobei die Gesteinskörnung eine Sieblinie von ± 5 % der Fuller-Parabel aufweist.

Die Erfindung betrifft weiterhin die Verwendung des erfindungsgemäßen Kimmschichtmörtels im Mauerwerksbau und ein Verfahren zur Herstellung einer Kimmschicht.

### Hintergrund der Erfindung

So genannte Kimmschichtmörtel kommen vor allem im Mauerwerksbau zum Einsatz, in dem die einzelnen Mauerwerksschichten in Dünnbettmörtel verlegt werden. Die Erstellung eines Planblockmauerwerks unter Verwendung von Dünnbettmörtel bedarf einer ebenen ersten Steinlage. Hierfür wird die erste Steinreihe (die Höhenausgleich- oder Kimmschicht) in ein Normalmörtelbett gesetzt. Bei hochwertigerem Mauerwerk geschieht dies mit einem reinen Zementmörtel der Mörtelgruppe M15 nach DIN EN 998-2 bzw. MG III nach DIN 1053. Heute verwendet man üblicherweise Sackware. Die Kimmschicht gleicht Unebenheiten der darunter liegenden Bauteile wie Betondecken oder Betonbalken aus. Von daher beträgt der Mörtelauftrag 2 bis 3 cm im Mittel für die Kimmschicht und verteilt sich auf die gesamte Steinbreite. Kimmschichten werden üblicherweise nur einlagig ausgeführt, doch im Rahmen allgemeiner bauaufsichtlichen Zulassungen sind auch zweilagige Schichten erlaubt (Xella Deutschland GmbH, Das Baubuch 2015/16 zur Erstellung eines Planblockmauerwerks, S. 115). Mauerwerksbauten verlangen grundsätzlich Abdichtungsmaßnahmen gegenüber Feuchtigkeit. Schutz bieten einfache bauliche Querschnittsabdichtungen bis hin zu vertikal eingebauten Schutzschichten gegen Bodenfeuchtigkeit und zeitweise anstehendes Wasser. Diese Maßnahmen sind besonders in Bereichen erforderlich, die später schlecht erreichbar sind. Deswegen ist eine richtige und bauortgeeignete Planung mit sorgfältiger Ausführung besonders wichtig, die eine Abdichtung sicher und langfristig gebrauchstauglich macht. Querschnittsabdichtungen werden direkt im Ablauf des Mauerwerks mit eingebaut, vertikale Abdichtungen erst nach Fertigstellung des Kellermauerwerks mit aufgebracht (Baubuch 2015/16, S. 116).

Innerhalb des Mauerwerks ist eine horizontale Feuchtesperre nach DIN 18195 anzubringen. Diese ist mindestens einlagig unter den Außen- und Innenwänden anzuordnen. Seit dem Jahr 2000 gibt es hierzu auch normative Regelungen. Normalerweise ordnet man die Querschnittsabdichtung direkt auf der Bodenplatte an, doch auch andere Anordnungen sind möglich, solange sie aufsteigende Feuchtigkeit verhindern, das verwendete Material geeignet ist und die Dicke der Abdichtungsebene den Herstellerangaben entspricht. Die Abdichtung muss an den Seiten überstehen. Der Einsatz mineralischer Dichtschlämme hat sich im modernen Mauerwerksbau immer weiter durchgesetzt und wird seit der Einführung des Eurocodes auch ausdrücklich als Alternative zu herkömmlichen Abdichtungssystemen genannt. Mittlerweile gehören sie der Normenreihe DIN 18195 an und sind nun auch entsprechend den Vorgaben und Herstellerangaben offiziell einsetzbar. Mit flexiblen Dichtschlämmen ist eine Querschnittsabdichtung mit einer Mindestdicke von 2 mm, allerdings in mindestens zwei Arbeitsschritten erreichbar. Es empfiehlt sich, jeweils unterschiedlich eingefärbtes Material für die beiden Lagen zu verwenden, damit erkennbar ist, an welchen Stellen der Auftrag bereits fachgerecht ausgeführt wurde. Mineralische Dichtschlämme werden besonders bei Kellermauerwerk mit hohen Anschüttungen eingesetzt, da die auftretenden Scherkräfte in der Lagerfuge besser aufgenommen werden (Baubuch 2015/16, S. 116ff).

Herkömmliche Kimmschichtmörtel sind nicht abdichtend gegen aufsteigende Feuchtigkeit im Mauerwerk. Neben der Abdichtfunktion werden an die Kimmschicht heute noch weitere Anforderungen gestellt. So sollen die Wärmedämmeigenschaften der Kimmschicht an die des Mauerwerks anpassbar sein, um Kältebrücken zu verhindern. Bei sulfathaltigen Wandbaustoffen ist ein erhöhter Sulfatwiderstand der Kimmschicht erforderlich. Mit herkömmlichen Kimmschichtmörteln können diese Anforderungen derzeit jedoch allenfalls teilweise erfüllt werden.

DE 101 13 978 A1 offenbart einen Trockenmörtel mit verbesserten Verarbeitungseigenschaften, der jedoch nicht abdichtend ist und sich somit nicht zur Herstellung einer Kimmschicht eignet.

DE 20 2011 050 860 U1 offenbart Inhaltsstoffe zur Herstellung sulfatresistenter Mörtel. Eine abdichtente Funktion ist damit nicht verbunden.

DE 103 13 937 A1 betrifft Dispergiermittel auf Polymerisationsbasis und offenbart Rezepturen von selbstverlaufenden hydraulisch abbindenden Mörtelmassen. Mörtelmassen auf der Basis von anorganischen Bindemitteln wie Zement, Kalk und Gips werden zur Verbesserung von deren Verarbeitbarkeit, beispielsweise deren Fließfähigkeit, Dispergiermittel zugesetzt. Kimmschichtmörtel dürfen jedoch nicht selbstverlaufend sein.

DE 10 2004 026 610 A1 betrifft Polymer-Zusammensetzungen auf der Basis von Vinylchlorid-Ethylen-Mischpolymerisaten, die sich zur Hydrophobierung von hydraulisch abbindenden Baustoffmassen. Vorzugsweise in Anwendungen, welche eine sehr hohe Hydrophobizität verlangen. Solche Anwendungen sind insbesondere einlagige Beschichtungen (Putze) wie Skim Coats oder Monocouche, aber auch Fugenfüller. Unter Skim Coats versteht man dabei sehr dünne Oberputze oder Glättspachtelauftragungen mit einer Dicke von im Allgemeinen 1 bis 3 mm. Oberputze eignen sich jedoch nicht für den Einsatz als Kimmschichtmörtel.

DE 19 51 171 A betrifft eine Mörtelgrundstoffmischung zur Darstellung von wasserabweisenden, atmungsfähigen und hochhaftfesten Isolier-, Verlege- und Verfugemörteln. Derartige Mörtelgrundstoffmischungen sind jedoch nicht für die Herstellung einer Kimmschicht geeignet, da Kimmschichtmörtel bzw. allgemein abdichtende Mörtel nicht atmungsaktiv sein dürfen. Bindemittelzusammensetzungen, die Zement, optional Calciumsulfat, mindestens ein Zinksalz und mindestens ein Alkylamin umfasst sowie eine Trockenmörtelmischung, welche besagte Bindemittelzusammensetzung enthält, werden in der WO 2019/096760 A1 offenbart. Die Zusammensetzungen, die ein Zinksalz und mindestens ein Alkylamin umfassen, werden zur Erreichung hoher Frühfestigkeiten in einer Bindemittelzusammensetzung verwendet. Eine abdichtende Funktion ist damit nicht verbunden.

DE 299 24 111 U1 betrifft einen säurebeständigen Mörtel oder einen säurebeständigen Beton aus einer zu verarbeitenden Mischung aus einem Bindemittel, Zuschlagstoff und Wasser. Der säurebeständige Beton eignet sich insbesondere für die Innenflächen von Kühltürmen, für die säurebeständige Beschichtungen, insbesondere Kunststoffbeschichtungen, nicht erforderlich sind. Der säurebeständige Beton enthält Additive rur Herabsetzung der Druckfestigkeit und des Elastizitätsmoduls Eine Herabsetzung der Druckfestigkeit und des Elastizitätsmoduls ist bei Kimmschichtmörteln jedoch unerwünscht.

### Kurze Zusammenfassung der Erfindung

Die Aufgabe der Erfindung besteht deshalb darin, eine Mörtelzusammensetzung bereitzustellen, die zur Herstellung der Kimmschicht im Mauerwerkbau geeignet ist und die gleichzeitig abdichtende Eigenschaften aufweist, damit der zusätzliche Einbau einer Feuchtigkeitssperre in das Mauerwerk und damit verbundene aufwändige Maßnahmen vermieden werden können.

Die Aufgabe der Erfindung wird gelöst durch Bereitstellung eines einkomponentigen Kimmschichtmörtels auf Basis überwiegend mineralischer Rohstoffe, der durch den Einsatz ausgewählter Rohstoffe zur Erstellung der Kimmschicht im Mauerwerksbau eingesetzt werden kann und sich zusätzlich als horizontale Abdichtung gegen aufsteigende Feuchtigkeit eignet. Optional kann für sulfathaltige Wandbaustoffe ein erhöhter Sulfatwiderstand oder/und durch Verwendung von Leichtzuschlag eine Reduzierung der Wärmeleitfähigkeit eingestellt werden. Als Einsatzstoffe kommen in Baustoffen bekannte und bewährte Materialien zur Verwendung, allerdings in neuer Kombination.

### Detaillierte Beschreibung der Erfindung

Die Erfindung stellt einen Kimmschichtmörtel mit Abdichtfunktion gemäß Anspruch 1 bereit. Dieser ist zur Erstellung einer Kimmschicht im Mauerwerksbau geeignet und weist gleichzeitig abdichtende Eigenschaften gegen aufsteigende Feuchtigkeit auf. Bei Verwendung des erfindungsgemäßen Kimmschichtmörtels bei der Erstellung einer Kimmschicht kann der Einbau einer zusätzlichen Feuchtigkeitssperre somit entfallen.

Bei der Auswahl und Dosierung der Mörtelkomponenten sind die entsprechenden Normen zu berücksichtigen. Dies sind u.a. die DIN EN 998-2 "Festlegungen für Mörtel im Mauerwerksbau - Teil 2: Mauermörtel" sowie die DIN 18195 mit den Anforderungen an die Abdichtung von Außen- und Innenwänden gegen aufsteigende Feuchtigkeit. Der Kimmschichtmörtel gemäß der Erfindung umfasst:
- 20-70 Gew.% mindestens eines mineralischen Zuschlagstoffs,
- 15-50 Gew.% mindestens eines Bindemittels,
- optional sulfatwiderstandsfähige Bindemittel, Füller- und Zuschlagstoffe zur Verbesserung des Sulfatwiderstands des Mörtels,
- mindestens ein Mittel zur Abdichtung, und
- mindestens ein weiteres Additiv.

In einer bevorzugten Ausführungsform besteht der erfindungsgemäße Kimmschichtmörtel aus den zuvor genannten Inhaltsstoffen.

Sofern nicht anders angegeben, beziehen sich die hierin gemachten Gew.%-Angaben auf die Trockenmasse der hierin beschriebenen Zusammensetzungen des erfindungsgemäßen Kimmschichtmörtels.

Der mit 20-70 Gew.% angegebene mindestens eine mineralischen Zuschlagstoff ist ausgewählt aus einer Gesteinskörnung mit einer Korngröße von 0-4 mm oder 0-2 mm oder 0-1 mm gemäß DIN EN 13139, vorzugsweise Kalksteinbrechsand und/oder Dolomitsteinbrechsand und/oder Quarzsand oder Kombinationen davon. Die Sieblinie dieses Zuschlags weist vorzugsweise ein ideales Korngemisch mit möglichst dichter Packung bzw. einen minimalen Hohlraumanteil auf. Die Sieblinie orientiert sich daher an der Fuller-Parabel, nach der die Massenanteile in jeder Kornklasse von der kleinsten zur größten Fraktion stetig zunehmen. Vorzugsweise weist die Gesteinskörnung des mindestens einen mineralischen Zuschlagstoffs eine Sieblinie gemäß den Werten in Tabelle 1 auf.

**Tabelle 1: Bevorzugte Kornverteilung der verwendeten Gesteinskörnungen als Siebdurchgang in Gew.-%**

| | Körnung 0/1 mm | Körnung 0/2 mm | Körnung 0/4 mm |
|---|---|---|---|
| ≤ 0,063 mm | 0-8 % | 0-8 % | 0-8 % |
| ≤ 0,125 mm | 5-15% | 5-15% | 5-15% |
| ≤ 0,25 mm | 17-50 % | 13-38 % | 10-30 % |
| ≤ 0,5 mm | 40-83 % | 30-63 % | 25-50 % |
| ≤ 1,0 mm | 90-100 % | 56-90 % | 45-70 % |
| ≤ 2,0 mm | - | 90-100 % | 70-90 % |
| ≤ 4,0 mm | - | - | 90-100 % |

In einer besonders bevorzugten Ausführungsform der Erfindung weist die Gesteinskörnung des mindestens einen mineralischen Zuschlagstoffs eine Sieblinie entsprechend oder zumindest ähnlich der Fuller-Parabel auf, d.h. liegt in einem Bereich von ± 5 % der Fuller-Parabel.

Da u.a. bei der Verwendung gewaschener Gesteinskörnungen der Anteil der Kornfraktionen < 0,063 mm bzw. < 0,125 mm gering ausfällt, entsteht ein unerwünschter Porenraum, der durch die feinen Bindemittelbestandteile ausgefüllt wird sowie ergänzend durch den Einsatz von Gesteinsmehlen ausgeglichen werden muss. Optimal ist ein Anteil von 5-15 % Siebdurchgang des mineralischen Zuschlagstoffs bei 0,063 mm unter Berücksichtigung des Einsatzes von Gesteinsmehlen. In einer bevorzugten Ausführungsform weist der mineralische Zuschlagstoff des erfindungsgemäßen Kimmschichtmörtels gewaschene Gesteinskörnungen mit einem Anteil von 1-20 %, besonders bevorzugt 5-15 % Siebdurchgang bei 0,063 mm auf.

In einer besonders bevorzugten Ausführungsform umfasst der Kimmschichtmörtel gemäß der Erfindung:
- 20-70 Gew.% mindestens eines mineralischen Zuschlagstoffs,
- 15-50 Gew.% mindestens eines Bindemittels,
- optional sulfatwiderstandsfähige Bindemittel, Füller- und Zuschlagstoffe zur Verbesserung des Sulfatwiderstands des Mörtels,
- mindestens ein Mittel zur Abdichtung, und
- mindestens ein weiteres Additiv,
wobei
- die Gesteinskörnung des mindestens eine mineralischen Zuschlagstoffs eine Sieblinie in einem Bereich von ± 5 % der Fuller-Parabel aufweist, und
- gewaschene Gesteinskörnungen mit einem Anteil von 1-20 %, besonders bevorzugt 5-15 % Siebdurchgang bei 0,063 mm aufweist.

In einer bevorzugten Ausführungsform besteht der erfindungsgemäße Kimmschichtmörtel aus den zuvor genannten Inhaltsstoffen.

Als Bindemittel werden mineralische, hydraulisch erhärtende Zemente nach DIN EN 197- 1:2011 -11 "Zement", wie z.B. Portlandzement (CEM I) und/oder Kalk nach DIN EN 459-1 und/oder puzzolanische oder latent hydraulische Bindemittel verwendet. Auch der Einsatz nicht genormter Zemente wie z.B. Calciumsulfoaluminat (CSA) und /oder Tonerdezement ist möglich. Der kumulierte Anteil der Bindemittel liegt üblicherweise bei mindestens 15 Gew.-%. Die Dosierung ist im Vergleich zu einem normalen M10-Mörtel nach DIN EN 998-2 vergleichsweise erhöht. Dies hat den Vorteil, dass der erfindungsgemäße Mörtel auch abdichtende Eigenschaften aufweist.

In einer weiteren Ausführungsform der Erfindung ist das Bindemittel des Kimmschichtmörtels ausgewählt aus mineralischen, hydraulisch erhärtenden Zementen nach DIN EN 197-1:2011-11, beispielsweise Portlandzement (CEM I), und/oder Kalk nach DIN EN 459-1 und/oder puzzolanischen oder latent hydraulischen Bindemitteln und/oder nicht genormten Zementen wie Calciumsulfoaluminat (CSA) und /oder Tonerdezement oder Kombinationen davon. In einer bevorzugten Ausführungsform enthält der erfindungsgemäße Kimmschichtmörtel mindestens ein Bindemittel oder mehrere Bindemittel mit einem kumulierten Anteil von 15-50 Gew.%. In einer besonders bevorzugten Ausführungsform enthält der erfindungsgemäße Kimmschichtmörtel mindestens ein Bindemittel oder mehrere Bindemittel mit einem kumulierten Anteil von mindestens 20 Gew.%, 25 Gew.%, 30 Gew.%, 35 Gew.%, 40 Gew.%, 45 Gew.% oder 50 Gew.%.

Ob als Putz, Estrich oder in Form von Platten, ohne Gips läuft in der Bauindustrie gar nichts. Das liegt zum einen an der ökologisch sowie ökonomisch vorteilhaften Herstellung, die vergleichsweise wenig Energie erfordert. Und zum anderen in der einfachen Verarbeitung und den günstigen bautechnischen Eigenschaften von Gips. Baustoffe - hergestellt aus dem Mineral Calciumdisulfat - setzen Baufirmen daher bevorzugt für den Innenausbau und bei der Sanierung von Gebäuden ein. Durchschnittlich werden etwa sieben Millionen Tonnen Gipsprodukte hergestellt - Tendenz steigend. Das Sortiment an Gipsbaustoffen ist groß und umfasst Baugipse und Calciumsulfat-Binder für Estriche, Gipskartonplatten, Gipsfaserplatten, Gipsbauplatten und Trockenestriche. Gipselemente machen dabei etwa die Hälfte des Gipssortiments aus. Der Anteil von Gipsputzen einschließlich Calciumsulfat-Bindern für Estriche, welche auf Wände oder Fußböden aufgebracht werden, beträgt rund ein Drittel. Die verbleibenden 17 Prozent werden als Abbinderegler bei der Zementherstellung benötigt (Müller, A., Das Sulfatproblem. RECYCLING magazin 22 (2012), S. 26-29).

Damit der erfindungsgemäße Kimmschichtmörtel auch mit sulfathaltigen Baustoffen, wie z.B. Porenbeton, verwendet werden kann, enthält der Kimmschichtmörtel weiterhin sulfatwiderstandsfähige Bindemittel, Füller- und Zuschlagstoffe zur Verbesserung des Sulfatwiderstands des Mörtels. Hierzu werden vorzugsweise Zemente mit hohem Sulfatwiderstand gemäß DIN EN 197-1, also SR-Zemente verwendet (SR = sulfate resisting, früher auch als HS-Zemente bezeichnet). Bei Einsatz von Portlandzementen ist ein niedriger Anteil an Tricalciumaluminat (C3A-Gehalt) vorteilhaft. Dieser liegt vorzugsweise bei ≤ 3 Gew.%. Des Weiteren sind Hochofenzemente CEM III und Puzzolanzemente CEM IV mit hohem Sulfatwiderstand geeignet.

In einer besonders bevorzugten Ausführungsform der Erfindung wird demnach ein Kimmschichtmörtel bereitgestellt, der zur Verbesserung des Sulfatwiderstands mindestens eine sulfatwiderstandsfähige Komponente enthält, die ausgewählt ist aus Zementen mit hohem Sulfatwiderstand gemäß DIN EN 197-1, wie SR (sulfate resisting)-Zementen, Portlandzementen mit einem Anteil an Tricalciumaluminat von ≤ 3, Hochofenzementen CEM III und Puzzolanzemente CEM IV mit hohem Sulfatwiderstand oder Kombinationen davon.

Eine besonders geeignete Zusammensetzung des Kimmschichtmörtels gemäß der Erfindung, die einen erhöhten Sulfatwiderstand aufweist, umfasst:
- 20-70 Gew.% mindestens eines mineralischen Zuschlagstoffs,
- 15-50 Gew.% mindestens eines Bindemittels,
- mindestens eine sulfatwiderstandsfähige Komponente enthält, die ausgewählt ist aus Zementen mit hohem Sulfatwiderstand gemäß DIN EN 197-1, wie SR (sulfate resisting)-Zementen, Portlandzementen mit einem Anteil an Tricalciumaluminat von ≤ 3 Gew.% bezogen auf den Anteil des Portlandzements in der Zusammensetzung, Hochofenzementen CEM III und Puzzolanzemente CEM IV mit hohem Sulfatwiderstand oder Kombinationen davon,
- mindestens ein Mittel zur Abdichtung, und
- mindestens ein weiteres Additiv,
wobei
- die Gesteinskörnung des mindestens eine mineralischen Zuschlagstoffs eine Sieblinie in einem Bereich von ± 5 % der Fuller-Parabel aufweist, und
- gewaschene Gesteinskörnungen mit einem Anteil von 1-20 %, besonders bevorzugt 5-15 % Siebdurchgang bei 0,063 mm aufweist.

In einer bevorzugten Ausführungsform besteht der erfindungsgemäße Kimmschichtmörtel aus den zuvor genannten Inhaltsstoffen.

Die sulfatwiderstandsfähige Komponente ist vorzugsweise mit einem Anteil von 50 - 100 % des mindestens einen Bindemittels in der Zusammensetzung vorhanden. D. h. der erfindungsgemäße Kimmschichtmörtel mit erhöhtem Sulfatwiderstand enthält in einer besonders bevorzugten Ausführungsform
- 0 bis 25 Gew.% mindestens eines Bindemittels, und
- 25 bis 50 Gew. % mindestens einer sulfatwiderstandsfähigen Komponente, die ausgewählt ist aus Zementen mit hohem Sulfatwiderstand gemäß DIN EN 197-1, wie SR (sulfate resisting)-Zementen, Portlandzementen mit einem Anteil an Tricalciumaluminat von ≤ 3 Gew.% bezogen auf den Anteil des Portlandzements in der Zusammensetzung, Hochofenzementen CEM III und Puzzolanzemente CEM IV mit hohem Sulfatwiderstand oder Kombinationen davon.

Zur Erzeugung einer abdichtenden Funktion werden Mittel eingesetzt, die dem Kimmschichtmörtel nach seiner Verarbeitung hydrophobe, d.h. wasserabweisende Eigenschaften verleihen. Geeignet hierfür sind Additive, die entweder schon in Pulverform, also bei der Dosierung, hydrophobierend wirken, aber auch Additive, die dem Mörtel erst nach dessen Verarbeitung hydrophobe Eigenschaften verleihen. Bevorzugt werden hierfür geeignete Dispersionspulver für Trockenmörtel eingesetzt. Gut geeignet sind hier Co- und Terpolymere auf Basis von Vinylacetat/Ethylen oder Vinylchlorid/Ethylen und anderen Monomeren wie beispielsweise Vinylester oder Vinyllaurat. Die mögliche Hydrophobierung unhydrophobierter Dispersionspulver kann beispielsweise über Stearate, Oleate oder Silicone erfolgen. Die Dosierung des Dispersionspulvers beträgt mindesten 0,3 Gew. %. Dies hat den Vorteil, dass der erfindungsgemäße Kimmschichtmörtel gute Abdichteigenschaften gegenüber aufsteigender Feuchtigkeit aufweist.

In einer bevorzugten Ausführungsform stellt die Erfindung daher einen Kimmschichtmörtel mit abdichtender Funktion bereit, wobei das mindestens eine Mittel zur Abdichtung ausgewählt ist aus Dispersionspulvern, wie Co- und Terpolymeren auf Basis von Vinylacetat/Ethylen oder Vinylchlorid/Ethylen und anderen Monomeren wie Vinylester oder Vinyllaurat oder Kombinationen davon.

In einer weiteren Ausführungsform der Erfindung wird ein Kimmschichtmörtel bereitgestellt, der ein unhydrophobiertes Dispersionspulver enthält, welches durch Zugabe von Stearaten, Oleaten oder Siliconen oder Kombinationen davon hydrophobiert werden kann.

Das Hydrophobierungsmittel kann auch unabhängig von einem Dispersionsmittel eingesetzt werden und selbst als Abdichtungsmittel oder in Kombination mit dem Dispersionsmittel als Abdichtungsmittel wirken. In diesem Falle enthält der Kimmschichtmörtel gemäß der Erfindung ein Hydrophobierungsmittel, ausgewählt aus Stearaten, Oleaten oder Siliconen oder Kombinationen davon. Dadurch wird eine separate Hydrophobierung des Kimmschichtmörtels erzielt, um ein kapillares Saugen des erhärteten Mörtels zu verhindern. Die Dosierung richtet sich dabei nach der Art des Hydrophobierungsmittels. Bevorzugt sind Doppelsalze von Fettsäuren wie z.B. Gemische von Na-Oleat und Ca-Stearaten. Bevorzugte Dosierungen liegen in der Größenordnung von 0,1 bis 0,8 %.

Besonders gute Ergebnisse in Bezug auf die Abdichtung gegen aufsteigende Feuchtigkeit wurden mit dem erfindungsgemäßen Kimmschichtmörtel erzielt, wenn der Kimmschichtmörtel das mindestens eine Mittel zur Abdichtung mit einem Anteil von mindestens 0,3 Gew.% enthält.

Eine besonders geeignete Zusammensetzung des Kimmschichtmörtels gemäß der Erfindung, die verbesserte Abdichteigenschaften gegenüber aufsteigender Feuchtigkeit aufweist, umfasst:
- 20-70 Gew.% mindestens eines mineralischen Zuschlagstoffs,
- 15-50 Gew.% mindestens eines Bindemittels,
- 0,3 Gew.% mindestens eines Mittels zur Abdichtung, und
- mindestens ein weiteres Additiv,
wobei
- die Gesteinskörnung des mindestens eine mineralischen Zuschlagstoffs eine Sieblinie in einem Bereich von ± 5 % der Fuller-Parabel aufweist, und
- gewaschene Gesteinskörnungen mit einem Anteil von 1-20 %, besonders bevorzugt 5-15 % Siebdurchgang bei 0,063 mm aufweist.

In einer bevorzugten Ausführungsform besteht der erfindungsgemäße Kimmschichtmörtel aus den zuvor genannten Inhaltsstoffen.

Zur Erhöhung des Sulfatwiderstands kann diese Ausführungsform des Kimmschichtmörtels weiterhin mindestens eine sulfatwiderstandsfähige Komponente enthält, die ausgewählt ist aus Zementen mit hohem Sulfatwiderstand gemäß DIN EN 197-1, wie SR (sulfate resisting)-Zementen, Portlandzementen mit einem Anteil an Tricalciumaluminat von ≤ 3 Gew.%, Hochofenzementen CEM III und Puzzolanzemente CEM IV mit hohem Sulfatwiderstand oder Kombinationen davon, enthalten.

Erfindungsgemäß kann der Kimmschichtmörtel mindestens ein weiteres Additiv enthalten. Geeignete Additive sind ausgewählt aus
∘ Entschäumern,
∘ quellfähige Tone,
∘ Mitteln zur Einstellung der Verarbeitungs- sowie technischen Festmörteleigenschaften, wie Wasserretentionsmittel, insbesondere Methylcellulose oder Guarkernmehl,
∘ Stellmitteln/Verdickern wie Stärkeether,
∘ Abbindebeschleunigern, wie Alkali- oder Erdalkalisalze von anorganischen oder organischen Säuren, und
∘ Fließmitteln.

Entschäumer und quellfähige Tonminerale wie Bentonit, verbessern die Wasserundurchlässigkeit und damit die abdichtenden Eigenschaften des Kimmschichtmörtels. Die geeignete Dosierung liegt hier bei 0,1-0,5 Gew.% für Entschäumer sowie bei 0,5-3 Gew.% für die quellfähigen Tone.

In einer bevorzugten Ausführungsform stellt die Erfindung daher einen Kimmschichtmörtel wie zuvor beschrieben bereit, wobei der Kimmschichtmörtel einen Gehalt von 0,01-0,5 Gew.% mindestens eines Entschäumers wie beispielsweise Agitan der Münzing Chemie GmbH enthält.

In einer bevorzugten Ausführungsform stellt die Erfindung daher einen Kimmschichtmörtel wie zuvor beschrieben bereit, wobei der Kimmschichtmörtel 0,5-3 Gew.% mindestens eines quellfähigen Tones wie beispielsweise Bentonit enthält.

Eine besonders geeignete Zusammensetzung des Kimmschichtmörtels gemäß der Erfindung, die verbesserte Abdichteigenschaften gegenüber aufsteigender Feuchtigkeit aufweist, umfasst:
- 20-70 Gew.% mindestens eines mineralischen Zuschlagstoffs,
- 15-50 Gew.% mindestens eines Bindemittels,
- 0,3 Gew.% mindestens eines Mittels zur Abdichtung, und
- mindestens ein weiteres Additiv, ausgewählt aus 0,01-0,5 Gew.% mindestens eines Entschäumers und/oder 0,5-3 Gew.% mindestens eines quellfähigen Tones,
wobei
- die Gesteinskörnung des mindestens eine mineralischen Zuschlagstoffs eine Sieblinie in einem Bereich von ± 5 % der Fuller-Parabel aufweist, und
- gewaschene Gesteinskörnungen mit einem Anteil von 1-20 %, besonders bevorzugt 5-15 % Siebdurchgang bei 0,063 mm aufweist.

In einer bevorzugten Ausführungsform besteht der erfindungsgemäße Kimmschichtmörtel aus den zuvor genannten Inhaltsstoffen.

Zur Erhöhung des Sulfatwiderstands kann diese Ausführungsform des abdichtenden Kimmschichtmörtels weiterhin mindestens eine sulfatwiderstandsfähige Komponente enthält, die ausgewählt ist aus Zementen mit hohem Sulfatwiderstand gemäß DIN EN 197-1, wie SR (sulfate resisting)-Zementen, Portlandzementen mit einem Anteil an Tricalciumaluminat von ≤ 3 Gew.%, Hochofenzementen CEM III und Puzzolanzemente CEM IV mit hohem Sulfatwiderstand oder Kombinationen davon, enthalten.

Zur Reduzierung der Wärmeleitfähigkeit und damit Anpassung an die Wärmedämmeigenschaften der Mauerwerkssteine ist die Verwendung von Luftporenbildnern und von Leichtzuschlägen erforderlich. Vorteilhaft sind aus brandschutztechnischen Gründen hier natürliche mineralische Leichtzuschläge. Mögliche Leichtzuschlagstoffe sind beispielsweise Perlit, Blähton oder Blähglas. Die Schüttdichten der Leichtzuschläge liegen bei einer Korngröße von 0,2 bis 4 mm, vorzugsweise 0,5 bis 3 mm, in der Größenordnung von 40 bis 300 kg/m³, bevorzugt von 80 bis 200 kg/m³.

In einer weiteren bevorzugten Ausführungsform der Erfindung wird ein Kimmschichtmörtel mit Abdichtfunktion nach bereitgestellt, wobei der Kimmschichtmörtel Additive und/oder Zuschläge zur Reduzierung der Wärmeleitfähigkeit und/oder Anpassung an die Wärmedämmeigenschaften der Mauerwerkssteine enthält, die vorzugsweise ausgewählt sind aus Luftporenbildner und/oder Leichtzuschlägen.

Besonders geeignet Leichtzuschläge sind ausgewählt aus mineralischen Leichtzuschlägen wie Perlit, Blähton oder Blähglas.

Eine besonders geeignete Zusammensetzung des Kimmschichtmörtels gemäß der Erfindung, die verbesserte Abdichteigenschaften gegenüber aufsteigender Feuchtigkeit und eine reduzierte Wärmeleitfähigkeit aufweist, umfasst:
- 20-70 Gew.% mindestens eines mineralischen Zuschlagstoffs,
- 15-50 Gew.% mindestens eines Bindemittels,
- 0,3 Gew.% mindestens eines Mittels zur Abdichtung,
- mindestens ein weiteres Additiv, ausgewählt aus 0,01-0,5 Gew.% mindestens eines Entschäumers und/oder 0,5-3 Gew.% mindestens eines quellfähigen Tones, und
- mindestens einen mineralischen Leichtzuschlagstoff mit einer Korngröße von 0,2 bis 4 mm, vorzugsweise 0,5 bis 3 mm bei einer Schüttdichte im Bereich von 40 bis 300 kg/m³, bevorzugt von 80 bis 200 kg/m³
wobei
- die Gesteinskörnung des mindestens eine mineralischen Zuschlagstoffs eine Sieblinie in einem Bereich von ± 5 % der Fuller-Parabel aufweist, und
- gewaschene Gesteinskörnungen mit einem Anteil von 1-20 %, besonders bevorzugt 5-15 % Siebdurchgang bei 0,063 mm aufweist.

In einer bevorzugten Ausführungsform besteht der erfindungsgemäße Kimmschichtmörtel aus den zuvor genannten Inhaltsstoffen.

Zur Erhöhung des Sulfatwiderstands kann diese Ausführungsform des abdichtenden Kimmschichtmörtels mit reduzierter Wärmeleitfähigkeit weiterhin mindestens eine sulfatwiderstandsfähige Komponente enthält, die ausgewählt ist aus Zementen mit hohem Sulfatwiderstand gemäß DIN EN 197-1, wie SR (sulfate resisting)-Zementen, Portlandzementen mit einem Anteil an Tricalciumaluminat von ≤ 3 Gew.%, Hochofenzementen CEM III und Puzzolanzemente CEM IV mit hohem Sulfatwiderstand oder Kombinationen davon, enthalten.

Darüber hinaus kann der erfindungsgemäße Kimmschichtmörtel weitere Additive zur Einstellung der Verarbeitungs- sowie technischen Festmörteleigenschaften wie Wasserretentionsmittel, insbesondere Methylcellulose oder Guarkernmehl, Stellmittel/Verdicker wie Stärkeether, Abbindebeschleuniger, beispielsweise Alkali- oder Erdalkalisalze von anorganischen oder organischen Säuren sowie Fließmittel enthalten. Diese Additive sind dem Fachmann bekannt.

In Tabelle 2 sind geeignete Zusammensetzungen des erfindungsgemäßen Kimmschichtmörtels zusammengefasst.

**Tabelle 2: Komponenten und Dosierung des erfindungsgemäßen Kimmschichtmörtels mit abdichtender Funktion. Alle Angaben in Gew.-%.**

| **Kimmschichtmörtel mit abdichtender Funktion** | | **Erhöhte Anforderungen für** | |
|---|---|---|---|
| Zement nach EN 197 | 15-50 | | |
| SR-Zement nach EN 197 | | Sulfatwiderstand | 15-50 |
| Latent-hydraulische Zusatzstoffe wie Hüttensandmehl | 0-25 | Sulfatwiderstand | 0-25 |
| Puzzolane | 0-25 | | |
| Füller Kalksteinmehl | 2-20 | | |
| Füller Quarzmehl | | Sulfatwiderstand | 2-20 |
| Zuschlag 0-4 mm oder feiner | 20-70 | | |
| Leichtzuschlag | 0-25 | Wärmedämmung | 5-25 |
| Celluloseether | 0,1-0,5 | | |
| Redispersionspulver | 5-15 | | |
| Verdicker | 0-1 | | |
| Hydrophobierungsmittel | 0-0,8 | | |
| Verflüssiger | 0-1,0 | | |
| Entschäumer | 0-0,5 | | |
| Wasserglas | 0-2 | | |
| Beschleuniger | 0-1,0 | | |
| Ton, quellfähig (Bentonit) | 0-3 | | |

Eine besonders bevorzugte Ausführungsform eines erfindungsgemäßen Kimmschichtmörtels mit abdichtender Funktion zur Erstellung einer Kimmschicht im Mauerwerksbau enthält:
∘ 15-50 Gew.% Zement, vorzugsweise Zement nach EN 197,
∘ 0-25 Gew.% Puzzolane;
∘ 2-20 Gew.% Kalksteinmehl,
∘ 20-70 Gew% eines mineralischen Zuschlagstoffs mit der Korngröße von 0-4 mm,
∘ 0,1-0,5 Gew.% Celluloseether,
∘ 3-15 Gew.% Redispersionspulver,
∘ 0-1 Gew.% Verdicker ,
∘ 0-0,8 Gew.% Hydrophobierungsmittel,
∘ 0-1 Gew.% Verflüssiger,
∘ 0-0,5 Gew.% Entschäumer,
∘ 0-2 Gew.% Wasserglas,
∘ 0-1 Gew.% Beschleuniger, und
o 0-3 Gew.% Ton, quellfähig (Bentonit).

In einer bevorzugten Ausführungsform besteht der erfindungsgemäße Kimmschichtmörtel aus den zuvor genannten Inhaltsstoffen.

Eine besonders bevorzugte Ausführungsform eines erfindungsgemäßen Kimmschichtmörtels mit abdichtender Funktion zur Erstellung einer Kimmschicht im Mauerwerksbau und mit erhöhtem Sulfatwiderstand enthält die folgenden Komponenten:
∘ 15-50 Gew.% SR-Zement, vorzugsweise SR-Zement nach EN 197,
∘ 0-25 Gew.% latent-hydraulische Zusatzstoffe wie Hüttensandmehl,
∘ 2-20 Gew.% Quarzmehl,
∘ 20-70 Gew% eines mineralischen Zuschlagstoffs mit der Korngröße von 0-4 mm,
∘ 0,1-0,5 Gew.% Celluloseether,
∘ 3-15 Gew.% Redispersionspulver,
∘ 0-1 Gew.% Verdicker ,
∘ 0-0,8 Gew.% Hydrophobierungsmittel,
∘ 0-1 Gew.% Verflüssiger,
∘ 0-0,5 Gew.% Entschäumer,
∘ 0-2 Gew.% Wasserglas,
∘ 0-1 Gew.% Beschleuniger, und
∘ 0-3 Gew.% Ton, quellfähig (Bentonit).

In einer bevorzugten Ausführungsform besteht der erfindungsgemäße Kimmschichtmörtel aus den zuvor genannten Inhaltsstoffen.

Die beiden zuvor dargestellten Ausführungsformen des erfindungsgemäßen Kimmschichtmörtels können weiter hinsichtlich ihrer Wärmeleitfähigkeit optimiert werden. Eine reduzierte Wärmeleitfähigkeit kann dadurch eingestellt werden, dass die Kimmschichtmörtelzusammensetzungen zusätzlich 0-25 Gew.% Leichtzuschläge enthalten.

Zusatzstoffe, die unabhängig voneinander ausgewählt sind aus Dispergiermitteln, wie z.B. Dispergiermittel auf Polymerisationsbasis; Polymer-Zusammensetzungen, wie z.B. Polymer-Zusammensetzungen auf der Basis von Vinylchlorid-Ethylen-Mischpolymerisaten; Zinksalzen und Alkylaminen, werden in der erfindungsgemäßen Kimmschichtmörtelzusammensetzung nicht benötigt. In einer bevorzugten Ausführungsform stellt die Erfindung die zuvor dargestellten Kimmschichtmörtel bereit, wobei diese Kimmschichtmörtel keine Zusatzstoffe enthalten, die unabhängig voneinander ausgewählt sind aus Dispergiermitteln, wie z.B. Dispergiermitteln auf Polymerisationsbasis; Polymer-Zusammensetzungen, wie z.B. Polymer-Zusammensetzungen auf der Basis von Vinylchlorid-Ethylen-Mischpolymerisaten; Zinksalzen und Alkylaminen, oder Kombinationen davon.

Additive, wie in der DE 299 24 111 U1 offenbart, können sich nachteilig auf die Druckfestigkeit und das Elastizitätsmodul eines Betons auswirken. In einer weiteren bevorzugten Ausführungsform stellt die Erfindung die zuvor dargestellten Kimmschichtmörtel bereit, wobei diese Kimmschichtmörtel keine Additive enthalten, die die Druckfestigkeit und/oder das Elastizitätsmodul des Kimmschichtmörtels herabsetzen.

Das Vorhandensein von Mikrosilika, wie in der DE 299 24 111 U1 offenbart, ist in den erfindungsgemäßen Kimmschichtmörteln nicht erforderlich. In einer weiteren bevorzugten Ausführungsform stellt die Erfindung die zuvor dargestellten Kimmschichtmörtel bereit, wobei diese Kimmschichtmörtel keine Mikrosilika enthalten.

Die Erfindung betrifft weiterhin die Verwendung der Kimmschichtmörtelzusammensetzungen, wie hierin beschrieben, zur Herstellung einer Kimmschicht im Mauerwerksbau.

Ein weiterer Aspekt der Erfindung betrifft ein Verfahren zur Herstellung einer Kimmschicht im Mauerwerksbau, umfassend die Schritte:
∘ Zugabe von Wasser zu einer Kimmschichtmörtelzusammensetzung, wie hierin beschrieben,
∘ anschließendes Mischen zur Herstellung einer wässrigen, pastösen Baustoffmasse, und
∘ der Wandstärke entsprechend vollflächiges Auftragen des Mörtels in einer Schicht oder mehreren Schichten auf eine Mauerwerksbasis,
wobei jede der einzelnen Mörtelschichten eine Schichtdicke zwischen 3 mm und 6 cm aufweist.

Die für eine optimale Erhärtung erforderliche Wasserrückhaltung der wässrigen, pastösen Baustoffmasse kann in dem erfindungsgemäßen Verfahren durch Zugabe von Methylcellulose eingestellt werden.

### Eigenschaften von Kimmschichtmörteln auf Basis der erfindungsgemäßen Kimmschichtmörtelzusammensetzungen

Mit den erfindungsgemäßen Kimmschichtmörtelzusammensetzungen werden, wie in dem erfindungsgemäßen Verfahren beschrieben, Kimmschichtmörtel zur Ausbildung einer Kimmschicht im Mauerwerksbau hergestellt. Die gewünschten Eigenschaften sowie Methoden zu deren Bestimmung werden nachfolgend beschrieben.

### Wasserundurchlässigkeit

Die Prüfung erfolgt in Anlehnung an DIN 1048-5 . Die Wasserundurchlässigkeit wird vorzugsweise an plattenförmigen Probekörpern von 20 cm x 20 cm x 12 cm geprüft. Es können auch andere in der DIN 1048-5 ausgewiesene Probekörper Verwendung finden. Ein mit einer erfindungsgemäßen Kimmschichtmörtelzusammensetzung hergestellter Kimmschichtmörtel wird in die Probekörper eingefüllt verdichtet und nach 16 h entformt. Sofort nach dem Entformen ist senkrecht zur Einfüllrichtung eine kreisrunde Fläche von 100 mm Durchmesser mit einer Drahtbürste aufzurauen. Im Anschluss erfolgt bis zum Prüfungstag nach 28 Tagen die Lagerung unter Wasser. Die Prüfung wird mit einem Prüfdruck von 1,5 bar über 3 Tage an der aufgerauten Seite der Prüfkörper durchgeführt. Die Beurteilung der Wassereindringtiefe erfolgt dann an den zuvor gespaltenen Prüfkörpern, die Wassereindringtiefe darf max. 10 mm betragen.

### Wasserdampfdiffusionsäquivalente Luftschichtdicke sd

Die wasserdampfdiffusionsäquivalente Luftschichtdicke sd ist ein Maß für die Durchlässigkeit gegenüber Wasserdampf. Sie wird berechnet aus der Dicke des Bauteils s (gemessen in Metern), in diesem Fall also der Dicke der Mörtelfuge sowie dem Wasserdampfdiffusionswiderstand µ. Die Berechnungsformel lautet sd = sµ. Die Prüfung des Wasserdampfdiffusionswiderstands µ erfolgt gemäß DIN EN ISO 12572 (Wärme- und feuchtetechnisches Verhalten von Baustoffen und Bauprodukten - Bestimmung der Wasserdampfdurchlässigkeit). Der Sd-Wert eines mit einer erfindungsgemäßen Kimmschichtmörtelzusammensetzung hergestellten Kimmschichtmörtels sollte beispielsweisebei einer Fugendicke von 2 cm mindestens 1000 m betragen.

### Luftporengehalt und Frischmörtelrohdichte

Die Prüfung erfolgt in Anlehnung an DIN EN 1015-7 (Luftgehalt von Frischmörtel) und DIN EN 1015-6 (Rohdichte von Frischmörtel). Der mit dem erfindungsgemäßen Kimmschichtmörtel hergestellte Kimmschichtmörtel weist dabei ein Ausbreitmaß von 12-17 cm, bestimmt nach DIN EN 1015-3 (Konsistenz von Frischmörtel) auf. Der Luftporengehalt beträgt max. 10 %, die Frischmörtelrohdichte mindestens 1.400 g/dm³.

### Druckfestigkeit

Die Lagerung und Prüfung erfolgt nach DIN EN 1015-11. Der mit dem erfindungsgemäßen Kimmschichtmörtel hergestellte Kimmschichtmörtel zeigt nach 28 d eine Druckfestigkeit von mindestens 10 N/mm².

### Trockenrohdichte

Die Trockenrohdichte des erhärteten Kimmschichtmörtels, der mit dem erfindungsgemäßen Kimmschichtmörtel hergestellt wurde, wird nach DIN EN 1015-10 (Trockenrohdichte von Festmörtel) bestimmt und zeigt nach 28 d Lagerung einen Wert von mindestens ≥ 1.300 g/dm³.

### Brandverhalten

Das Brandverhalten des erhärteten Kimmschichtmörtels, der mit dem erfindungsgemäßen Kimmschichtmörtel hergestellt wurde, entspricht mindestens der Baustoffklasse B2 "normal entflammbar" nach DIN 4102, Teil 1.

### Kapillare Wasseraufnahme

Die Anforderung an die kapillare Wasseraufnahme, bestimmt nach dem Prismenverfahren gemäß DIN EN 1015-18 (Bestimmung der kapillaren Wasseraufnahme von erhärtetem Mörtel) hat einen Wert von maximal 0,05 kg/(m² · min^{0,5}).

### Sulfatwiderstand

Die Sulfatwiderstandsfähigkeit ist optional für die Anwendung von sulfathaltigen Wandbaustoffen und wird in Anlehnung an DIN plus/EAACA RECOMMENDATION R7 mit dem DIN plus-Verfahren "Bestimmung der Längenänderung am Fugenprisma" beurteilt (eaaca RECOMMENDATION R7 "Test conditions for thin bed mortar", European Autoclaved Aerated Concrete Association, 2002). Der Kimmschichtmörtel, der mit dem erfindungsgemäßen Kimmschichtmörtel hergestellt wurde, zeigt nach einer Lagerzeit von 20 Wochen keine Risse in den Fugen der Verbundprobenkörper bzw. eine Dehnung von höchstens 0,1 mm pro 2 mm Fugenstärke.

### Ausführungsbeispiele

Es wurden Kimmschichtmörtel mit den Zusammensetzungen gemäß Tabelle 3 hergestellt.

**Tabelle 3: In den Ausführungsbeispielen verwendete Kimmschichtmörtelzusammensetzungen**

| | **Ausführungsbeispiele** | | | |
|---|---|---|---|---|
| **Komponenten** | Dosierung [Gew.-%] | | | |
| Ausführungsbeispiele | **1** | **2** | **3** | **4** |
| CEM I 42,5 R | | | | 15,00 |
| CEM III /A 42,5 N | | 30,00 | 45,00 | |
| CEM I 52,5 N-SR3/NA | 20,00 | | | |
| Hüttensandmehl | | | | 15,00 |
| Kalksteinmehl | 5,68 | 19,40 | 10,40 | 14,40 |
| Quarzmehl | 15,00 | | | |
| Quarzsand 0/4 mm | 58,00 | 40,00 | 36,00 | 67,00 |
| Leichtzuschlag 0/3 mm | | 5,00 | | |
| Celluloseether | 0,01 | 0,10 | 0,50 | 0,20 |
| Redispersionspulver | | 5,00 | 7,00 | 3,00 |
| Verdicker | 1,00 | | | |
| Hydrophobierungsmittel | 0,30 | 0,50 | 1,00 | 0,40 |
| Entschäumer | 0,01 | | 0,10 | |
| Summe | 100,000 | 100,000 | 100,000 | 100,000 |

Die Eigenschaften von Kimmschichtmörteln, die mit den in Tabelle 3 dargestellten Kimmschichtmörtelzusammensetzungen hergestellt wurden, wurden gemäß den in der Beschreibung in dem Kapitel "Eigenschaften von Kimmschichtmörteln auf Basis der erfindungsgemäßen Kimmschichtmörtelzusammensetzungen" beschriebenen Methoden untersucht. Die Ergebnisse sind in Tabelle 4 dargestellt.

**Tabelle 4: Eigenschaften von Kimmschichtmörteln, die mit den in Tabelle 3 dargestellten Kimmschichtmörtelzusammensetzungen hergestellt wurden**

| | | **Ausfü hru ngsbeispiele** | | | |
|---|---|---|---|---|---|
| **Eigenschaften** | Einheit | **1** | **2** | **3** | **4** |
| Sulfatwiderstandsfähigkeit | mm/2mm Fugenstärke | 0,1 | 0,1 | 0,1 | 0,1 |
| Schwindverhalten | mm/m | ≤ 2,5 | ≤ 2,5 | ≤ 2,5 | ≤ 2,5 |
| Rissüberbrückungsverhalten | mm | | | ≥ 0,4 | |

| Wärmedämmung λ | W(mK) P 50% | | ≤ 0,61 | | |
|---|---|---|---|---|---|
| 10,dry,mat | W(mK) P 90% | | ≤ 0,66 | | |
| Wasserretention | % | | > 90 | > 99 | > 99 |
| Druckfestigkeit | N/mm2 | ≥ 10 | 15-25 | 25-30 | 15-25 |
| Wasserundurchlässigkeit | | Dicht* | Dicht* | Dicht* | Dicht* |
| Kapillare Wasseraufnahme | kg/(m²min0,5) | ≤ 0,05 | ≤ 0,05 | ≤ 0,05 | ≤ 0,05 |

| | | | | | |
|---|---|---|---|---|---|
| ***Wassereindringtiefe max. 10 mm** | | | | | |

### Verarbeitung

Der erfindungsgemäße Kimmschichtmörtel ist ein Trockenmörtel, liegt also in Form einer Trockenmischungen vor. Diese ist vor ihrer Anwendung durch Zugabe von Wasser und anschließendes Mischen in eine wässrige, pastöse Baustoffmasse zu überführen. Die zugegebene Wassermenge orientiert sich an der verarbeitungsgerechten Konsistenz des Frischmörtels. Die Schichtdicke des Mörtels beträgt mindestens 3 mm und höchstens 6 cm und kann in einem Arbeitsgang aufgetragen werden. Bei mehrmaligem Auftrag sind auch höhere Gesamtschichtdicken möglich, vorzugsweise bewegt sich jede der einzelnen Schichten dann in der genannten Größenordnung. Verwendbar sind alle üblichen Steinarten, die den einschlägigen Normen oder auch nationalen Zulassungen entsprechen. Bei Verwendung von sehr stark saugenden Steinen kann über die Rezeptur die für eine optimale Erhärtung erforderliche Wasserrückhaltung über Methylcellulose eingestellt, alternativ können die Steine vor dem Vermauern angefeuchtet oder getaucht werden. Aufgrund der abdichtenden Eigenschaften, muss der Mörtel vollfugig verarbeitet werden.

## Patentansprüche

1. Kimmschichtmörtel mit Abdichtfunktion, enthaltend
• 20-70 Gew.% mindestens eines mineralischen Zuschlagstoffs,
• 15-50 Gew.% mindestens eines Bindemittels,
• optional sulfatwiderstandsfähige Bindemittel, Füller- und Zuschlagstoffe zur Verbesserung des Sulfatwiderstands des Mörtels,
• mindestens ein Mittel zur Abdichtung, und
• mindestens ein weiteres Additiv;
**dadurch gekennzeichnet, dass** der mindestens eine mineralische Zuschlagstoff ausgewählt ist aus einer Gesteinskörnung gemäß DIN EN 13139, vorzugsweise Kalksteinbrechsand und/oder Dolomitsteinbrechsand und/oder Quarzsand oder Kombinationen davon, wobei die Gesteinskörnung eine Sieblinie von ± 5 % der Fuller-Parabel aufweist.

2. Kimmschichtmörtel nach Anspruch 1 , **dadurch gekennzeichnet, dass** der mineralische Zuschlagstoff Gesteinskörnungen mit einem Anteil von 1-20 % bei einem Siebdurchgang von 0,063 mm aufweist.

3. Kimmschichtmörtel nach einem der vorherigen Ansprüche, **dadurch gekennzeichnet, dass** das mindestens eine Bindemittel ausgewählt ist aus mineralischen, hydraulisch erhärtende Zementen nach DIN EN 197-1:2011-11, beispielsweise Portlandzement (CEM I), und/oder Kalk nach DIN EN 459-1 und/oder puzzolanischen oder latent hydraulischen Bindemitteln und/oder nicht genormten Zementen wie Calciumsulfoaluminat (CSA) und /oder Tonerdezement oder Kombinationen davon.

4. Kimmschichtmörtel nach einem der vorherigen Ansprüche, **dadurch gekennzeichnet, dass** der Kimmschichtmörtel zur Verbesserung des Sulfatwiderstands mindestens eine sulfatwiderstandsfähige Komponente enthält, die ausgewählt ist aus Zementen mit hohem Sulfatwiderstand gemäß DIN EN 197-1, wie SR (sulfate resisting)-Zementen, Portlandzementen mit einem Anteil an Tricalciumaluminat von ≤ 3, Hochofenzementen CEM III und Puzzolanzemente CEM IV mit hohem Sulfatwiderstand oder Kombinationen davon ausgewählt ist.

5. Kimmschichtmörtel nach einem der vorherigen Ansprüche, **dadurch gekennzeichnet, dass** das mindestens eine Mittel zur Abdichtung ausgewählt ist aus unhydrophobierten oder hydrophobierten Dispersionspulvern, wie Co- und Terpolymeren auf Basis von Vinylacetat/Ethylen oder Vinylchlorid/Ethylen und anderen Monomeren wie Vinylester oder Vinyllaurat oder Kombinationen davon.

6. Kimmschichtmörtel nach einem der Ansprüche 1 bis 5, **dadurch gekennzeichnet, dass** der Kimmschichtmörtel ein Hydrophobierungsmittel, ausgewählt aus Stearaten, Oleaten oder Siliconen oder Kombinationen davon, enthält.

7. Kimmschichtmörtel nach einem der vorherigen Ansprüche, **dadurch gekennzeichnet, dass** der Kimmschichtmörtel Additive enthält, die ausgewählt sind aus
∘ Entschäumern,
∘ quellfähige Tone,
∘ Mitteln zur Einstellung der Verarbeitungs- sowie technischen Festmörteleigenschaften, wie Wasserretentionsmittel, insbesondere Methylcellulose oder Guarkernmehl,
∘ Stellmitteln/Verdickern wie Stärkeether,
∘ Abbindebeschleunigern, wie Alkali- oder Erdalkalisalze von anorganischen oder organischen Säuren, und
∘ Fließmitteln.

8. Kimmschichtmörtel nach Anspruch 7, **dadurch gekennzeichnet, dass** der Kimmschichtmörtel Additive und/oder Zuschläge zur Reduzierung der Wärmeleitfähigkeit und/oder Anpassung an die Wärmedämmeigenschaften der Mauerwerkssteine enthält, die ausgewählt sind aus Luftporenbildner und/oder Leichtzuschlägen.

9. Kimmschichtmörtel nach Anspruch 8, **dadurch gekennzeichnet, dass** die Leichtzuschläge ausgewählt sind aus mineralischen Leichtzuschlägen wie Perlit, Blähton oder Blähglas.

10. Kimmschichtmörtel nach einem der Ansprüche 8 oder 9, **dadurch gekennzeichnet, dass** die Leichtzuschläge zur Reduzierung der Wärmeleitfähigkeit und/oder Anpassung an die Wärmedämmeigenschaften der Mauerwerkssteine eine Schüttdichte von 40 bis 300 kg/m³ bei einer Korngröße von 0,2 bis 4 mm aufweisen.

11. Kimmschichtmörtel mit Abdichtfunktion nach einem der Ansprüche 1 bis 10, enthaltend:
∘ 15-50 Gew.% Zement, vorzugsweise Zement nach EN 197,
∘ 0-25 Gew.% Puzzolane;
∘ 2-20 Gew.% Kalksteinmehl,
∘ 20-70 Gew% eines Zuschlages mit der Korngröße von 0-4 mm,
∘ 0,1-0,5 Gew.% Celluloseether,
∘ 3-15 Gew.% Redispersionspulver,
∘ 0-1 Gew.% Verdicker ,
∘ 0-0,8 Gew.% Hydrophobierungsmittel,
∘ 0-1 Gew.% Verflüssiger,
∘ 0-0,5 Gew.% Entschäumer,
∘ 0-2 Gew.% Wasserglas,
∘ 0-1 Gew.% Beschleuniger, und
∘ 0-3 Gew.% Ton, quellfähig (Bentonit).

12. Kimmschichtmörtel mit Abdichtfunktion nach einem der Ansprüche 1 bis 10, wobei der Kimmschichtmörtel einen erhöhten Sulfatwiderstand aufweist, enthaltend:
∘ 15-50 Gew.% SR-Zement, vorzugsweise SR-Zement nach EN 197,
∘ 0-25 Gew.% latent-hydraulische Zusatzstoffe wie Hüttensandmehl,
∘ 2-20 Gew.% Quarzmehl,
∘ 20-70 Gew% eines Zuschlages mit der Korngröße von 0-4 mm,
∘ 0,1-0,5 Gew.% Celluloseether,
∘ 3-15 Gew.% Redispersionspulver,
∘ 0-1 Gew.% Verdicker ,
∘ 0-0,8 Gew.% Hydrophobierungsmittel,
∘ 0-1 Gew.% Verflüssiger,
∘ 0-0,5 Gew.% Entschäumer,
∘ 0-2 Gew.% Wasserglas,
∘ 0-1 Gew.% Beschleuniger, und
∘ 0-3 Gew.% Ton, quellfähig (Bentonit).

13. Kimmschichtmörtel nach Anspruch 11 oder 12, wobei der Kimmschichtmörtel eine reduzierte Wärmeleitfähigkeit aufweist, zusätzlich enthaltend
∘ 0-25 Gew.% Leichtzuschläge.

14. Verfahren zur Herstellung einer Kimmschicht im Mauerwerksbau, umfassend die Schritte:
∘ Zugabe von Wasser zu einem Kimmschichtmörtel gemäß einem der Ansprüche 1 bis 13,
∘ anschließendes Mischen zur Herstellung einer wässrigen, pastösen Baustoffmasse, und
∘ der Wandstärke entsprechend vollflächiges Auftragen des Mörtels in einer Schicht oder mehreren Schichten auf eine Mauerwerksschicht,
wobei jede der einzelnen Mörtelschichten eine Schichtdicke zwischen 3 mm und 6 cm aufweist.

15. Verfahren nach Anspruch 14, **dadurch gekennzeichnet, dass** die für eine optimale Erhärtung erforderliche Wasserrückhaltung der wässrigen, pastösen Baustoffmasse durch Zugabe von Methylcellulose eingestellt wird.
